# DEMANDE DE BREVET EUROPEEN

(11) **EP 1 243 800 A2**
(43) Date de publication de la demande: **25.09.2002**
(21) Numéro de dépôt: 02076051.8
(22) Date de dépôt: 20.03.2002
(51) Int. Cl.: F16B 2/06, F16B 45/00

(54) **Bride pour ancrage de sécurité**

(30) Priorité: 20.03.2001 BE 200100183
(71) Demandeur: New Technelec S.A., 6000 Charleroi (BE)
(72) Inventeur: Szymkowicz, Pascal, 6120 Court sur Heure (BE)
(74) Mandataire: Colens, Alain

(57) **Abrégé**

L'invention concerne une bride à installer sur un élément tubulaire vertical tel un tube ou mât métallique par example un tube de support d'antenne GSM. La bride est apte à être munie d'une pièce d'ancrage (4,5) pour connection avec un élément se sécurité anti-chute. La bride comprend une plaque en U dont deux ailes (11,11 épousent partiellement la forme du tube, et au moins un étrier (3) boulonné à la bride comprenant un arrondi (3') complémentaire au tube de façon telle que la bride puisse enserrer le tube sur essentiellement l'entièreté de son pourtour. On prévoit une vis de fixation (8) ou de blocage complémentaire traversant le dos de la bride (1) et la bloquant avec enfoncement dans ledit tube métallique.

## Description

La présente invention concerne une bride de fixation à installer sur un élément tubulaire vertical tel un tube ou mât métallique. En pratique il s'agira par exemple d'un tube de support d'antenne, en particulier d'antenne GSM,

Ces antennes , une fois installées, le long d'un support tubulaire vertical métallique doivent pouvoir rester accessibles pour les mises au point, l'entretien etc.. par un personnel qualifié.

Il est donc indispensable d'assurer une sécurité totale aux personnes grimpant sur ces supports d'antenne en permettant l'utilisation d'un point d'ancrage fiable pour un élément de fixation, par exemple un mousqueton,

Selon l'invention au propose une bride de serrage à fixer, de préférence de manière définitive, autour du tube à son extrémité supérieure, au dessus de l'élément à accéder, c'est à dire par exemple au dessus de l'antenne.

Selon un mode de réalisation, la bride de serrage comprend une plaque en U dont les deux ailes latérales présentent un profil concave épousant une section du profil transversal arrondi du tube. Cette plaque en U supporte un élément d'ancrage, par exemple sous la forme d'une plaquette en L. Cette plaquette peut se présenter plus précisément sous la forme d'un élément asymétrique, par exemple sous la forme d'une oreille métallique épaisse (p.e. 3 à 4 mm) et perpendiculaire au dos de la pièce en U, munie d'un trou. Le trou sera par exemple un trou oblong d'environ 30 mm, apte à recevoir un câble ou de préférence un connecteur (par exemple un mousqueton).

La bride est également composée, du côté opposé à la plaque en U, d'au moins un, de préférence plusieurs, étriers en U dont les extrémités sont boulonnées dans des paires de trous prévues dans la plaque. Ces étriers, ou colliers de serrage, présentent un arrondi également complémentaire au tube et la bride peut donc enserrer le tube sur pratiquement toute sa circonférence.

Cette configuration n'est cependant pas parfaite, un poids de plusieurs centaines de kilos exercé sur l'élément d'ancrage en forme d'oreille étant apte à faire glisser la bride le long du tube,

Par ailleurs, si pour remédier à cet éventuel glissement, on augmente la force de serrage des étriers ou collier de serrage, la plaque en U se déforme, s'écrase et s'abîme.

Selon l'invention, afin de renforcer la fixation de la bride au tube sans l'abîmer, on prévoit en plus vis une de blocage adaptée sur la bride et qui est apte à serrer et à s'enfoncer superficiellement dans le tube.

On a également constaté qu'avantageusement cette vis peut présenter à son extrémité une cuvette tranchante facilitant une pénétration superficielle (par exemple 0,5 à 2,5 mm, de préference environ 1 mm) dans le métal du tube.

On a testé avec succès le dispositif susmentionné en conformité avec la norme EN 795. La fixation ne bouge pas même avec un poids supérieur à 1 tonne. Ce résultat est obtenu sans devoir excessivement serrer les étriers.

Selon un exemple de réalisation donné à titre non limitatif, la bride est de préférence en matière inox, par exemple inox 304 d'épaisseur 4 mmm et d'une hauteur de 80 mm. Les étriers peuvent être fixés avec des rondelles et écrous "Nylstop". La vis de blocage peut être en inox M10 sans tête à 6 pans creux du côté extérieur avec la cuvette tranchante susmentionnée. Typiquement 4 trous de 13 mm aux extrémités sont prévus pour accueillir deux étriers inox M12.

Les dessins en annexe illustrent davantage l'invention sans toutefois la limiter.

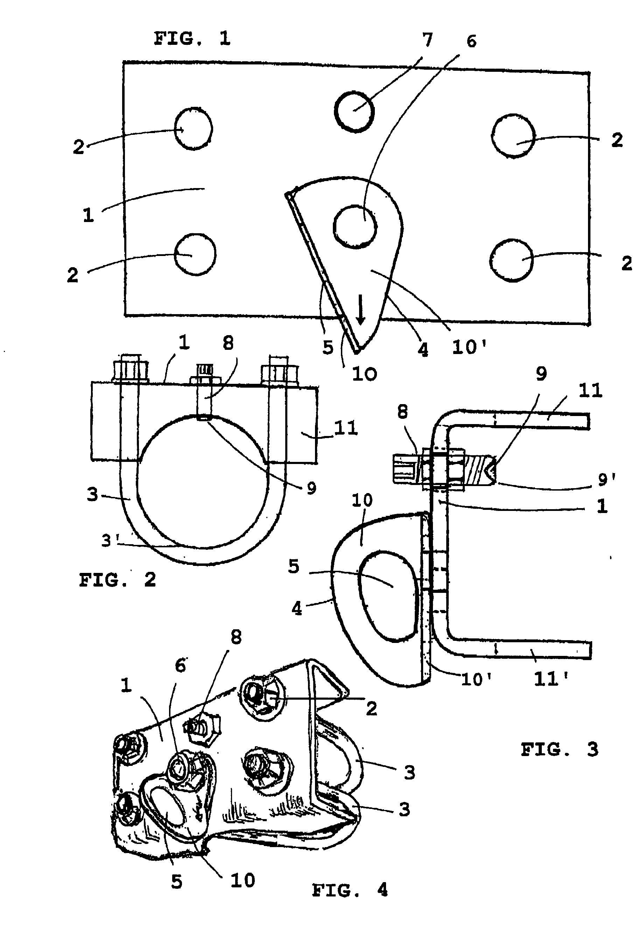

La fig. 1 représente une vue en plan du dos de la bride.
La figure 2 représente une vue du dessus la bride, sans la pièce d'ancrage 4.
La figure 3 représente une vue latérale avec la pièce d'ancrage sans son boulon de fixation.
La figure 4 est un croquis en perspective de la bride complète.

Dans les figures on distingue le dos de la bride 1 avec deux ailes 11, 11' et avec 4 trous 2 latéraux de fixation des étriers 3 sous la forme de demi colliers de serrage aux extrémités filetées. Le point d'ancrage est une plaquette 4 en L dont une face 10 est perpendiculaire au dos et comprend un ouverture 5 pouvant accueillir un connecteur (non illustré), l'autre face 10' étant fixée par un boulon 6 avec rondelle et écrou, au dos 1 de la bride. Au dessus de la plaquette 4 en L on prévoit un trou 7 avec écrou soudé pour accueillir la vis inox 8 de blocage sans tête à 6 pans creux du côté extérieur, et extrémité en cuvette 9 au bord 9' tranchant, du côté tube. La vis de blocage est donc facilement enfoncée avec une clé Allen.

## Revendications

1. Bride apte à être munie d'un pièce d'ancrage (4, 5) pour connection avec un élément de sécurité anti-chute, ladite bride étant destinée à être fixée à un tube ou mât vertical, ladite bride comprenant une plaque en U dont deux ailes (11, 11') épousent partiellement la forme du tube et au moins un étrier (3) boulonné à la bride comprenant un arrondi (3') complémentaire au tube de façon telle que la bride puisse enserrer le tube sur essentiellement l'entièreté de son pourtour **caractérisé en ce que** l'on prévoit une vis de fixation (8) complémentaire traversant le dos de la bride et la fixant avec enfoncement dans ledit tube.

2. Bride selon la revendication précédente dans lequel le tube ou mât est métallique.

3. Bride selon la revendication 1 ou 2 dans laquelle la vis de serrage (8) comprend une cuvette au bord tranchant (9) à l'extrémité du côté tube.

4. Bride selon n'importe laquelle des revendications précédentes dans laquelle la vis de serrage ou de fixation (8) est sans tête à 6 pans creux du côté extérieur.

5. Bride selon n'importe laquelle des revendications précédentes **caractérisé en ce qu'**il y a deux étriers (3) de fixation.

6. Bride selon n'importe laquelle des revendications précédentes dans lequel la pièce d'encrage et en L, une face (10) munie d'un trou (5) étant fixée perpendiculaire au dos (1) et l'autre face étant fixée par un boulon (6) audit dos.
